# EUROPEAN PATENT APPLICATION

(11) **EP 4 575 801 A1**
(43) Date of publication of application: **25.06.2025**
(21) Application number: 23218520.7
(22) Date of filing: 20.12.2023
(51) Int. Cl.: G06F 11/36, G06F 8/65, G06F 21/57, G06F 21/12

(54) **TESTING AN UPDATE TO A SOFTWARE APPLICATION ON A TARGET WEBSITE**

(71) Applicant: SAP SE, 69190 Walldorf (DE)
(72) Inventor: BLAMBERG, Stefan, 69190 Walldorf (DE)
(74) Representative: Müller-Boré & Partner Patentanwälte PartG mbB

(57) **Abstract**

A computer implemented method, a computer program and a computer system for testing an update to a software application on a target website. The computer-implemented method comprises accessing a web page of a version control system for the software application via a web browser and determining, by the web browser at the web page of the version control system, one or more modified files of the software application that are modified by the update to the software application on the target website. The update of the software application refers to each of the one or more modified files of the software application by a respective URL. The method further comprises loading the update to the software application into a web page of the target website via the web browser and executing the update to the software application on the target website via the web browser. Executing the update to the software application on the target website via the web browser comprises accessing the one or more modified files of the software application via their respective URLs.

## Description

The technical field of the present application is software application testing, particularly, software application testing in a web-based distributed environment (i.e., a distributed system).

A software application may be developed using a version control system. The software application may be a web-based application for release to one or more target websites. After the software application has been released to a target website, problems in the software application may be detected and a need to update the software application may arise. It may be desirable to test an update to the software application in the environment of the target website in order to ensure that the update functions not only in a development computing environment but also in a computing environment of the target website. In some cases, it may take several months (e.g., 3 to 6 months) between when a problem in the software application is identified and when an update to the software application that provides a fix to the problem is produced. A long interval between problem identification and release of an update is especially likely when use of the software application and identification of the problem takes place at a first location (e.g., a location of the target website) and development of the update takes place at a second location different from the first location (e.g., a location of a version control system). Another possibility is when the first location is controlled by a first entity and the second location is controlled by a second entity different from the first entity. Particularly in such cases, it is desirable that the update to the software application functions properly and does not cause additional problems.

According to a first aspect, a computer implemented method for testing an update to a software application on a target website is provided. The method comprises accessing a webpage of the version control system for the software application via a web browser. The method further comprises determining, by the web browser at the webpage of the version control system, one or more modified files of the software application that are modified by the update to the software application on the target website.

The update to the software application refers to each one of the one or more modified files of the software application by a respective uniform resource locator (URL).

The method further comprises loading the update to the software application into a webpage of the target website via the web browser. The method further comprises executing the update to the software application on the target website via the web browser. Executing the update to the software application on the target website via the web browser comprises accessing the one or more modified files of the software application via their respective URLs.

The respective URLs may be partial URLs, e.g., extensions or suffixes of URLs. A prefix including a protocol (e.g., HTTP, HTTPS or data) and/or a domain name of the target website may be added to each of the URLs mentioned above.

The update to the software application may further comprise one or more unmodified files of the software application that are not modified by the update to the software application. The one or more unmodified files of the software application may be identified on the target website. The update to the software application may refer to each of the one or more unmodified files of the software application by a respective URL. Executing the update to the software application on the target website on the target website via the web browser may further comprise accessing the one or more unmodified files of the software application via their respective URLs.

Hence, the one or more modified files of the software application may be modified by the update to the software application in the sense that the one or modified files of the software application are changed or edited in order to address an issue with the software application or fix a problem with the software application. In contrast to the one or more modified files of the software application, the one or more unmodified files of the software application may be unchanged or unaffected in comparison to respective files of the software application on the target website. Accordingly, addressing the issue or fixing the problem with the software application may only affect a subset of the files of the software application and the subset of the files of the software application may include or consist of the one or more modified files of the software application.

The method may further comprise encoding, by the web browser, each of the one or more modified files of the software application for access at the target website. The encoding of each of the one or more modified files of the software application may be carried out by a browser extension of the web browser. More specifically, the encoding may be carried out by a client-side script of the browser extension, e.g., a content script of the browser extension.

In the context of the present disclosure, various web browsers may be used. Exemplary web browsers include Google Chrome, a Chromium based web browser such as Microsoft Edge and Mozilla Firefox. More generally, web browsers supporting client-side scripting (e.g., via JavaScript), and/or declarative network requests may be used. In addition, the web browser may support a browser extension framework (e.g., allow browser extensions and/or content script injection). It is often the case that web browsers for mobile devices (e.g., web browsers for Apple iOS or Google Android operating systems) do not support browser extensions.

Advantageously, the web browser may also support a content security policy HTTP header. Support for the content security policy HTTP header may provide improved security, e.g., protection from cross-site scripting (XSS).

The update to the software application may be prepared and/or developed on the version control system.

The update to the software application on the target website may include URLs referring to one or more files of the software application that are modified by the update to the software application (i.e., the one or more modified files of the software application). The update to the software application on the target website may include URLs referring to files that are not modified by the update to the software application (i.e., the one or more unmodified files of the software application).

Loading the update to the software application into the webpage of the target website via the web browser may comprise loading the modified files of the software application into the webpage of the target website via the web browser.

Loading the update to the software application into the webpage of the target website via the web browser may further comprise loading the unmodified files of the software application into the webpage of the target website via the web browser.

The software application and/or the update to the software application may comprise a plurality of browser-interpretable files, i.e., files that can be interpreted by a web browser. Browser-interpretable files may also be referred to as web files or Internet files and may include files having one of the following formats: Hypertext Markup Language (HTML), dynamic HTML, active server pages (ASP), JavaScript Object Notation (JSON), extensible markup language (XML), cascading stylesheets (CSS), XML Paper Specification (XPS), etc. The modified files of the software application and/or the unmodified files of the software application may comprise source code files, more specifically, client-side script files, even more specifically, JavaScript files.

The software application may be a large, complex application with many files. For example, in some cases, the software application may include several hundred or even several thousand files (e.g., at least 100 files, at least 500 files, at least 1000 files or at least 5000 files), which may include between 10,000 and 100,000 lines of code or up to 1 million lines of code. In another case, the software application may include tens of millions of lines of code.

More specifically, the software application may include about 500 files. In some cases, the one or more modified files of the software application may include or consist of less than about 5% of the (total) files of the software application. Hence, the one or more modified files of the software application that are modified by the update to the software application on the target website may include about 5 files and the one or more unmodified files of the software application that are not modified by the update to the software application on the target website may include about 495 files.

The version control system may be used to manage changes to the software application. The version control system may be referred to as a revision control system, source control system or source code management system. The version control system may track and provide control over changes to source code. The version control system may track multiple versions of the software application and track updates to versions of the software application that are deployed to different target websites. The version control system may include a distributed version control system, such as Git. The version control system may include a web-based code review tool, such as Gerrit or Github.

The software application may be a web-based software application accessible and/or operated via the web browser. In addition or alternatively, changes to and/or development of the software application may be carried out via the web browser.

The version control system may include at least one web server and/or the version control system may be hosted on a website. The target website may differ from the version control system. The target website may include at least one Web server. The version control system may be at a first location and the target website may be at a second location, wherein the first location differs from the second location.

Using the approach described above, all files modified in the update of the software application (e.g., files committed in the version control system with a version later than a version of the software application on the target website) can be tested under conditions (see e.g., a client interface environment) matching those of a user of the target website (as opposed to conditions applying to a developer of the update of the software application). Files modified by the update of the software application may be executed with files that are not modified by the update of the software application in the environment of the target website. This may enable testing to be carried out in a computing environment equivalent to a computing environment used by a user of the target website.

The environment of the target website may differ from the VCS in ways that could affect testing the update of the software application. For example, business data used in the software application, customizations of the software application or applications depended on by the software application (e.g., extensions, low code no code adaptations, etc.), server performance at the target website (e.g., timing issues) and versions of software application files on the target website (e.g., unexpected combinations of software packages that are not distributed together may be in use) may all affect testing the update of the software application.

In contrast to the approach described above, according to conventional approaches, individual updated files of a software application may be selected for testing. However, these conventional approaches introduce further possibilities for errors. For example, errors that might become apparent when testing all files of the software application from the VCS on the target website might not be visible when testing is limited to selected files. In addition, it is possible that not all updated files are tested at once, which might result in missing errors that only occur when all the updated files are tested together.

Accessing the webpage of the version control system for the software application via the web browser may comprise using authentication credentials of a user of the version control system. Determining the one or more modified files of the software application that are modified by the update to the software application may comprise using the authentication credentials of the user of the version control system.

The approach of accessing the webpage of the version control system using the authentication credentials of the user of the version control system may have the advantage that it is not necessary to use an application programming interface of the version control system to determine files modified by the update to the software application. In this connection, many version control systems do not provide an application programming interface suitable for determining files modified by an update to a software application. Hence, use of the user authentication credentials may enable limitations of the version control system to be overcome.

In some cases, the method may further comprise loading an override script into the web page of the version control system. The override script may be loaded on demand and/or based on user input. Before loading the override script, the method may further comprise verifying that the web page is part of the version control system and/or verifying that the web page includes the one or more modified files of the software application that are modified by the update to the software application or a reference to the one or more modified files of the software application that are modified by the update to the software application.

The method may further comprise executing, by the web browser, the override script. Executing the override script may comprise determining, by the override script, the one or more modified files of the software application that are modified by the update to the software application on the target website from the version control system.

The override script may be a client-side script. The override script may access a document object model of the webpage of the version control system and/or the override script may access a subset of application programming interfaces of the web browser. Loading the override script may comprise loading the override script by an extension of the web browser. Executing the override script may comprise executing the override script and a private execution environment that is not accessible by the webpage of the version control system and/or not accessible by extensions of the web browser other than the extension of the web browser that loaded the override script. The override script may be a content script. Loading the override script may comprise injecting the override script into the webpage of the version control system by the extension of the web browser.

In the context of the present disclosure, a script (e.g., the override script or a security script) may be a client-side script and/or a content script.

A client-side script may be contrasted with a server-side script. The client-side script may the executed in a web browser and can interact with a web page (e.g., a dynamic web page) via a document object model of the webpage to query a state of the webpage and modify the state of the webpage. The client-side script may be in a client-side scripting language such as JavaScript, ECMAScript, CoffeeScript or ActionScript.

A content script may run in the context of a webpage and may be used to modify content of the webpage or interact with the webpage's document object model (DOM). The content script may be a client-side script that runs in a private execution environment of a browser extension, isolated from the webpage and other browser extensions. The content script may be injected into the webpage programmatically (as opposed to statically, e.g., via a manifest file), e.g., upon being called via the browser extension. Other types of client-side scripts capable of modifying content of a web page and/or interacting with the webpage's DOM may also be used.

A browser extension may be a software module for customizing a web browser. The browser extension may have access to all application programming interfaces (APIs) of the web browser. In contrast, a client-side script or a content script may only have partial access to APIs of the web browser and may run in a scope between the browser extension and a webpage, e.g., the content script may have a namespace that is distinct from a namespace of the browser extension. Put another way, the content script may be a part of the browser extension that enables the extension to access the DOM of the webpage; accessing the DOM of the webpage might not be possible for the browser extension without the content script.

In some cases, determining the one or more modified files of the software application that are modified by the update to the software application may comprise comparing latest (e.g., most recent) versions of files of the software application on the version control system to versions of respective files of a specified version of the software application. In addition or alternatively, determining the one or more modified files of the software application may comprise comparing update times of the files (e.g., the latest versions of the files) of the software application on the version control system to update times of the files of the specified version of the software application. The files of the software application installed on the target website may have the specified version. The files of the software application having the specified version may be accessible on the version control system.

In this connection, the respective files of the software application on the target website may each have a specified version and/or a specified update time, which may correspond to a released version of the software application. More specifically, files of the released version of the software application may be equivalent to the files installed on the target website and the files of the released version of the software application may have the specified version and/or the specified update time, where the specified version and/or the specified update time may differ for different files of the released version of the software application.

Accordingly, comparing the latest versions of files of the software application on the version control system to versions of respective files having the specified version of the software application may be equivalent to comparing the latest versions of the files of the software application on the version control system to versions of respective files of the software application on the target website. Similarly, comparing update times of the files of the software application on the version control system to update times of the files of the specified version of the software application may be equivalent to comparing update times of the files of the software application on the version control system (e.g., files of the software application most recently committed to the version control system) to files of the software application installed on the target website.

The one or more modified files of the software application that have been modified by the update to the software application may have been committed to the version control system as updates to the specified version of the software application, i.e., as updates to a version of the software application in use on the target website.

The one or more unmodified files of the software application that are not modified by the update to the software application may be unchanged in comparison to respective files of the specified version of the software application, i.e. in comparison to respective files of the version of the software application in use on the target website.

Determining the one or more modified files of the software application that are modified by the update to the software application may comprise applying regular expressions to files of the version control system. The regular expressions may be used to distinguish files of the software application to be tested from files that are not to be tested, e.g., by checking the file extension. For example, testing the update to the software application on the target website may be limited to client-side testing or testing of a portion of the software application that can be executed in the web browser. Files of the software application that do not belong to the client-side (e.g., server-side files) and/or files of the software application that cannot be executed in the web browser (e.g., server-side scripts) may be excluded from the update to the software application, e.g., using the regular expressions.

In some cases, applying regular expressions to files of the version control system may include determining which libraries the one or more modified files of the software application belong to. More generally speaking the regular expressions may be used to enable debug sources depending on the scope of the update to the software application to be tested.

Furthermore, regular expressions may be used by the content script to extract metadata regarding the update to the software application from the VCS (e.g., a commit identifier, whether debug sources are to be used, etc.).

In addition or alternatively, determining the one or more modified files of the software application that are modified by the update to the software application may comprise receiving one or more user selections of modified files of the software application.

The method may further comprise, for each one of the modified files of the software application, storing the modified file with a different version of the modified file of the software application. The different version of the modified file of the software application may be an older or earlier version of the modified file of the software application. In some cases, the different version of the modified file of the software application may correspond to the specified version of the software application, e.g., the different version of the modified file of the software application may be a version of the modified file of the software application that was provided with the specified version of the software application or the different version of the modified file of the software application may be unmodified in comparison to a respective file of the software application on the target website. In other cases, the different version of the modified file of the software application may be older than the version of the modified file of the software application on the target website.

The method may further comprise switching from one of the one or more modified files of the software application to the different version of the one of the one or more modified files of the software application. Switching from the modified file of the software application to the different version of the respective modified file of the software application may have the advantage of facilitating troubleshooting of problems with the modified file of the software application or resolving a compatibility issue with the modified file of the software application and another file of the software application on the target website.

For example, for each one of the modified files of the software application that are modified by the update to the software application, storing the modified file of the software application with the different version of the modified file of the software application may comprise encoding, by the override script, each of the one or more modified files of the software application for access at the target website. The encoding of each of the one or more modified files of the software application for access at the target website may further comprise encoding the respective different (e.g., unmodified) version of the modified file of the software application.

More specifically, a modified file of the software application that is modified by the update to the software application and a different version of the modified file of the software application may be stored according to PersistenceWriteAPl.js. PersistenceWriteAPI.js may include the following code:

```
  { files: [
     {
       fileName: 'sap/ui/fl/write/api/PersistenceWriteAPI',
       fileExtension: 'js',
       lib: 'sap/ui/fl',
       content: 'encodingOfModifiedPersistenceWriteAPI',
       original Content: 'encodingOfUnmodifiedPersistenceWriteAPI',
       changeType: 'MODIFIED',
      },
  ],
  patchId: '6018324',
  patchset: 2,
  subject: "[INTERNAL] [FIX] sap.ui.fl: Don't consider hidden variants for higher layer check",
 status: 'NEW',
 }
```

### Listing 1

Listing 1 includes an array named "files". The "files" array includes metadata of the "PersistenceWriteAPI" file as well as the entire contents (encoded) of a modified version of "PersistenceWriteAPI" (i.e., an exemplary modified file of the software application modified by the update to the software application) and the entire contents of a different (e.g., original or unmodified) version of "PersistenceWriteAPI".

As shown in listing 1, a file having the name "PersistenceWriteAPI" has a file extension ".js". The modified content of the "PersistenceWriteAPI" file is encoded after the "content" keyword (i.e., the source code of "PersistenceWriteAPI" is encoded after the "content:" keyword) and the different (e.g., respective unmodified) version of the "PersistenceWriteAPI" file is encoded after the "originalContent:" keyword. Version information for the modified file is included after the "patchID" and "patchset" keywords and a comment on the modifications to "PersistenceWriteAPI" is included after the "subject:" keyword. In some cases base64 encoding may be used, however, other encoding techniques are also possible.

Including both the modified und unmodified versions of a file together may have the advantage of enabling rapid switching back and forth between modified files of the software application and different (e.g., unmodified) versions of the modified files, in order to more quickly identify problems in the update to the software application might be causing a problem. For example, reverting to different (e.g., unmodified) versions of files may make it easier to identify problems arising from extensions in use at the target website that are not in use at the version control system.

In addition or alternatively, each URL referring to the one or more modified files of the software application may include an update indicator, indicating that the respective file belongs to the update to the software application. For example, the update indicator may be an extension to an identifier of the respective file of the software application (e.g., "-dbg", "-debug","-patch"). More specifically, an identifier of a file of the software application may be PersistenceWriteAPl.js and an update indicator may be "-dbg". Accordingly, a URL referring to a modified file based on PersistenceWriteAPl.js may include PersistenceWriteAPI-dbg.js; hence, an identifier of the respective modified file may be PersistenceWriteAPI-dbg.js. The one or more unmodified files of the software application may also include an update indicator.

Before loading the update to the software application into the webpage of the target website via the web browser, the method may further comprise retrieving, by the web browser, at least one security header of the target website.

The at least one security header may include a security policy of the target website restricting remote code execution by web browsers accessing the target website. In other words, the security policy may specify one or more domains (e.g., domain names) that are valid sources of executable client-side scripts. Accordingly, in view of the security policy, the web browser may only execute scripts loaded in source files received from the one or more domains specified by the security policy. In this way, the security policy may be used to prevent cross site scripting (XSS), clickjacking and other forms of code/data injection attack resulting from execution of malicious content in a trusted webpage.

The security policy of the target website specifies one or more origins of content that the web browser is allowed to load on the target website and/or one or more allowed application layer protocols.

The method may further comprise, loading, by the web browser into the web page of the target website, a security script. The security script may be loaded on demand and/or based on user input. The method may further comprise, executing, by the web browser, the security script. Executing the security script may comprise retrieving the at least one security header of the target website and/or modifying the security policy specified by the security header of the target website by adding the additional application layer protocol to the one or more allowed application layer protocols of the security policy.

In the context of the present disclosure, an application layer protocol may be understood with respect to the open systems interconnection model (OSI model) as an interface responsible for communicating with host-based and/or user facing applications. In addition or alternatively, the application layer protocol may be understood with respect to the Internet protocol suite (TCP/IP) as containing communication protocols and interface methods used in process-to-process communications across an Internet Protocol computer network. The application layer may standardize communication and depend upon underlying transport layer protocols to establish host-to-host data transfer channels and manage data exchange in a clientserver or peer-to-peer networking model. Examples of application layer protocols include hypertext transfer protocol, file transfer protocol, simple mail transfer protocol, secure shell.

Executing the security script may further comprise modifying, by the security script, the security policy specified by the security header of the target website by adding an additional application layer protocol to the one or more allowed application layer protocols of the security policy. The additional application layer protocol may specify an encoded string for a URL.

The additional application layer protocol may provide a way to include data inline in a webpage as if the data were an external resource. In other words, the additional application layer protocol may provide a way to include a here document (i.e., a section of source code that is treated as if the section of source code were a separate file) in the webpage.

The security script may be a client-side script. Loading the security script and/or loading the update to the software application may comprise using authentication credentials of a user of the target website. Executing the security script may comprise executing the security script by an extension of the web browser. The security script may be a content script that is loaded into the extension of the web browser. The security script may be injected into the webpage of the target website by the extension of the web browser.

Executing the security script may comprise executing the security script in a private execution environment that is not accessible by the webpage of the target website and/or not accessible by extensions of the web browser other than the extension of the web browser that loaded the security script.

The at least one security header may be a Hypertext Transfer Protocol (HTTP) header or the at least one security header may be included in a META tag of a hypertext markup language (HTML) document. The security header may include a content security policy (CSP) header and/or the security policy may include a content security policy. The web browser may be compatible with applying the security policy and/or the web browser may be a CSP compatible browser.

The additional application layer protocol may further specify a media type and/or a character set. The media type may identify a client-side scripting language, e.g., JavaScript. The additional application layer protocol may be or include the data uniform resource identifier (URI) scheme. When using the data URI scheme, a length of the URI may be limited to about 2 kilobytes (KB) or to about 3 KB or to about 5 KB. For larger files that cannot be sent using the data URI scheme, a service worker (e.g., JavaScript code that acts as a proxy between web browsers and web servers) may be used.

The method may further comprise, encoding, by the web browser, each of the one or more modified files of the software application for access at the target website. The method may further comprise preparing, by the web browser, for each of the one or more modified files of the software application, a redirection request to redirect a request for a URL referring to the respective modified file of the software application to a respective URL including the encoding of the respective modified file of the software application.

Executing the update to the software application on the target website via the web browser may comprise using the redirection requests for each of the one or more modified files to redirect requests for URLs of the one or more modified files of the software application to respective URLs including (e.g., encoding) the respective one or more modified files of the software application.

A redirection request may include URL redirection and/or URL forwarding. In addition or alternatively, the redirection request may include a filter or pattern to be matched against a requested URL. Accordingly, when a URL including the filter is requested by a browser, the browser is redirected to a specified URL.

Executing the update to the software application on the target website via the web browser may comprise formulating the redirection requests for each of the one or more modified files of the software application as declarative network requests. An exemplary declarative network request may appear as follows:

```
       {
         action: {
           type: 'redirect',
           redirect: {
           url: 'data:text/javascript;cliarset
=UTF-8;base64,encodingOfPersistenceWriteAPI-dbg.js',
           },
         },
         condition: {
           urlFilter: 'sap/ui/fl/write/api/PersistenceWriteAPI-dbg.js',
           resourceTypes: [
             'main_frame',
             'xmlhttprequest',
             'script',
         ],
       },
     };
```

### Listing 2

Listing 2 includes an action and a condition, such that if the condition is met, the action is carried out. Accordingly, the action is carried out for URLs including the following string from the urlFilter of the condition: 'sap/ui/fl/write/api/PersistenceWriteAPI-dbg.js', i.e., for URLs requesting the file "PersistenceWriteAPI-dbg.js", where "-dbg" indicates that "PersistenceWriteAPI-dbg.js" is a modified file having an original filename of "PersistenceWriteAPI.js". The request for the URL must also specify one of the resource types of the condition, e.g., the XMLHTTPRequest JavaScript class (or an equivalent class in another client-based scripting language). The action to be carried out is to redirect a request for the URL conforming to the urlFilter string to the following URL specified in the action: 'data:text/javascript;charset=UTF-8;base64,encodingOfPersistenceWriteAPI-dbg.js". Accordingly, the redirection is to an additional application layer protocol including the encoding of the respective modified file ("PersistenceWriteAPI-dbg.js") as the encoded string for the URL.

The update to the software application may differ from the software application (i.e., the original software application or the software application without the update) in that URLs referring to modified files of the software application that are modified by the update to the software application are replaced with URLs encoding the modified files of the software application that are modified by the update to the software application. In other words, URLs referring to files of the software application on the target website are replaced with URLs encoding respective modified versions of the files of the software application on the target website.

Encoding, by the web browser, each of the one or more modified files of the software application for access at the target website may comprise converting arbitrary bytes (which may include non-ASCII or non-printable characters) to sequences of American Standard Code for Information Interchange (ASCII) and/or printable characters using base64 encoding. Alternatively, base 122, base58, base36, uuencode or hexadecimal representations can be used for the encoding. However, base64 may be more efficient and/or be more easily compressed than the alternatives.

The one or more unmodified files of the software application may be directly accessed via their respective URLs, i.e., the one or more unmodified files of the software application may be accessed without redirection.

Accessing the one or more modified files of the software application via their respective URLs may comprise using the redirection requests for each of the one or more modified files to redirect requests for URLs of the one or more modified files of the software application to the respective URLs encoding the respective one or more modified files of the software application.

The method may further comprise verifying access (e.g., HTTP access) to the one or more modified files of the software application and/or verifying access to the one or more unmodified files of the software application. The verifying may comprise receiving a respective HTTP response code. For example, for the one or more modified files of the software application, respective HTTP response codes indicating that redirection has been performed may be received, e.g., HTTP response code 307 may be received for each of the one or more modified files of the software application. Similarly, for the one or more unmodified files of the software application, HTTP response codes indicating that the one or more unmodified files of the software application have been directly accessed may be received, e.g., HTTP response code 200 may be received for each of the one or more unmodified files of the software application.

Encoding each of the one or more modified files of the software application for access at the target website may comprise encoding each of the one or more modified files of the software application for access at the target website via the additional application layer protocol.

When using the redirection requests (e.g., as prepared by the override script), each respective URL encoding the modified file of the software application may specify the additional application layer protocol including the encoding of the respective modified file as the encoded string for the URL.

The redirection requests may be asynchronous hypertext transfer protocol (HTTP) requests. More specifically, the redirection requests may be XMLHttpRequests, corresponding to the XMLHttpRequest JavaScript class or a similar class in another client-side scripting language.

Using the redirection requests (e.g., as prepared by the override script) for each of the one or more modified files may include redirecting a request for a URL matching a pattern specified in the override script to a respective URLs encoding a respective one of the one or more modified files of the software application that has been modified by the update to the software application.

Conventionally, updates to web-based software applications may be tested by intercepting or blocking network requests and altering them at runtime, e.g., via the chrome.webRequest extension. This is insecure (i.e., has negative security implications of the target web site) since arbitrary modifications to the intercepted or blocked network requests can be made (e.g., the intercepted network requests can be directed to malicious or untrusted websites, possibly by accident). In addition, intercepting and/or blocking network requests may lead to poor performance. Moreover, modern browsers might not allow the interception or blocking of network requests (e.g., Google Chrome, manifest version 3).

Another conventional alternative is to remove the at least one security header (e.g., the CSP header) and/or the security policy from the target website in order to test an update to a software application on the target website. Moreover, the conventional approach typically involves removing all security policies (e.g., all CSPs) from all websites in the domain of the target website or all websites on the same subnet as the target website, since it may be difficult to identify which parts of the domain or subnet of the target website are involved in the software update and which parts of the domain or subnet of the target website are not involved in the software update. Accordingly, removing of security policies according to the conventional approach may include removing security policies from websites that are not involved in the software update. Removing the security header (e.g., the security policy) from the target website (and possibly other websites in the subnet or domain of the target website) would enable source files from arbitrary origins to be tested, i.e., testing source files from a remote version control system alongside source files present on the target website. However, removing the security header from the target website has negative security implications, e.g., opening up the target website to cross site scripting, other forms of injection attack and possibly forms of data sniffing. Modifying the security policy specified by the at least one security header without removing the security header may have the effect that network requests (e.g., declarative network requests) can be used, the security policy of the target website is still enabled, the modification is more targeted (e.g., limited to one website and one protocol) and therefore more secure.

For example, in the context of CSP, a retrieved security header of the target website might include the following CSP:

```
default-src 'self' ; script-src 'self' https://*.
sap.hana.ondemand.com https://ui5.sap.com ; style-src 'self'
 https://*.sap.hana.ondemand.com https://ui5.sap.com
 'unsafe-inline' ; img-src 'self' https: http: data:
 blob: ; media-src 'self' https: http: data: blob: ;
object-src blob: ; connect-src 'self' https: wss: ; base-uri
 'self' ; report-uri /sap/bc/csp/report
```

A modified CSP based on the CSP of the retrieved security header might look as follows:

```
 default-src 'self' ; script-src 'self' https://*.sap.
hana.ondemand.com https://ui5.sap.com ; style-src 'self'
 https://*.sap.hana.ondemand.com https://ui5.sap.com
 'unsafe-inline' ; img-src 'self' https: http: data:
 blob: ; media-src 'self' https: http: data: blob: ;
object-src blob: ; connect-src 'self' https: wss: data: ; base-
 uri 'self' ; report-uri /sap/bc/csp/report
```

In the example above, the modified CSP differs from the retrieved CSP in that "data:" has been added to the "connect-src" directive of the modified CSP.

According to a second aspect, a computer program comprising instructions that, when the program is executed by a computer, cause the computer to carry out the method described above is provided. The computer program may be implemented as a computer program product.

According to a third aspect, a computer readable medium storing the computer program is provided. The computer program may be tangibly embodied in the computer readable medium and/or the computer readable medium may be non-transitory.

According to a fourth aspect, a computer system for testing an update to a software application on a target website is provided. The system comprises a web browser of a client computer configured to access a webpage of a version control system for the software application. The web browser is further configured to determine, at the web page of the version control system, one or more modified files of the software application that are modified by the update to the software application on the target website.

The update to the software application refers to each of the one or more modified files of the software application by a respective URL.

The web browser is further configured to load the update to the software application into a web page of the target website. The web browser is further configured to execute the update to the software application on the target website. To execute the update to the software application on the target website, the web browser is configured to access the one or more modified files of the software application via their respective URLs.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Figures

Figure 1 shows a steps of a method for testing an update to a software application on a target website according to some embodiments.
Figure 2 shows further steps of the method for testing an update to a software application on a target website according to some embodiments.
Figure 3 continues the steps of the method shown in figure 2 for testing an update to a software application on target website.
Figure 4 shows a class diagram of an implementation of the method for testing an update to a software application on a target website.
Figure 5 shows a block diagram showing components of a system for testing an update to a software application on a target website according to some embodiments.
Figure 6 shows a general-purpose computer that may be used to implement steps of the method for testing an update to a software application.

### Detailed Description of the Figures

In the following text, a detailed description of examples will be given with reference to the drawings. Various modifications to the examples may be made. In particular, one or more elements of one example may be combined and used in other examples to form new examples.

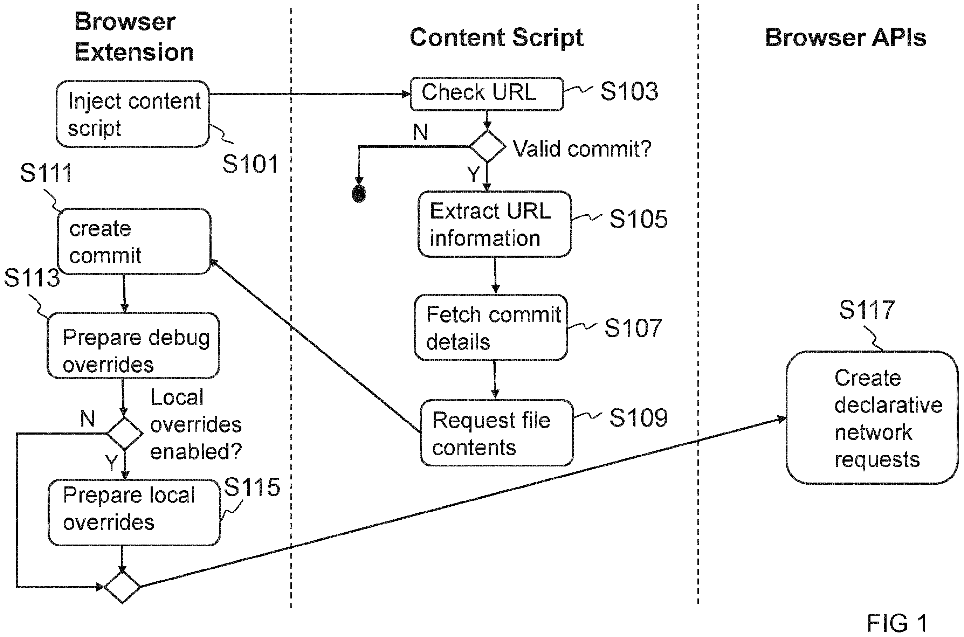

Figure 1 shows steps of a method for testing an update to a software application on a target website that may be carried out according to some embodiments.

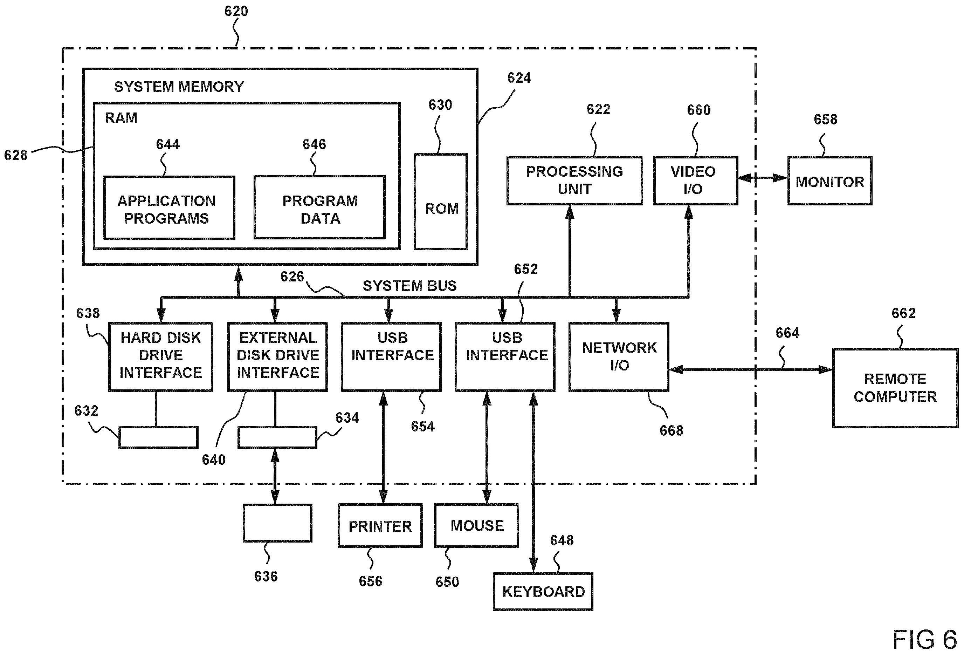

The method may comprise accessing a webpage of the version control system for the software application via a web browser. The web browser may be executed on a computing device, as described with regard to figure 6. At S101, the method may further comprise loading (e.g., by the web browser) a content script into the webpage of the version control system. The content script may be referred to as an override script. Loading the content script into the webpage of the version control system may comprise injecting, by a browser extension of the web browser, the content script into the webpage of the version control system.

The content script may determine one or more modified files of the software application that are modified by the update to the software application on the target website.

The update to the software application may further comprise one or more unmodified files of the software application that are not modified by the update to the software application.

Determining the one or more modified files of the software application that are modified by the update to the software application may include, at S103 checking, by the content script, URLs of files on the version control system referred to by the software application. If the URLs refer to files validly committed to the version control system that can be used to update the software application on the target website (e.g., because the files have corresponding versions greater or later than the versions of respective files of the software application on the target website), then at S105 information extracted from the URLs is used to obtain further details about validly committed files at S107. More specifically, step S107 may include comparing latest versions of the files of the software application on the version control system to versions of respective files of a specified version of the software application. The specified version of the software application may be a version of the software application known to be loaded on the target website.

At S109, the method may comprise requesting contents of the validly committed files.

At S111, the update to the software application on the target website may be prepared. Preparing the update to the software application may include encoding each of the one or more modified files of the software application for access at the target website.

At S113, the method may further comprise preparing, by the web browser, for each of the one or more modified files of the software application, a redirection request to redirect a request for a URL referring to the respective modified file of the software application to a respective URL including the encoding of the respective modified file of the software application.

If local overrides are enabled, local overrides are prepared at S115. Local overrides may include files of the software application to be modified for testing the update to the software application.

Local overrides may be used for non-bundled distributions, e.g., to test local development on the VCS (i.e., the localhost) rather than on the target website. In some cases, local overrides may differ from debug overrides only in the URLs used.

At S117, network requests (e.g., declarative network requests) are prepared for testing the update to the software application on the target website. Step S117 may be carried out before executing the update to the software application on the target website via the web browser. The network requests prepared at step S117 may be used when executing the update to the software application on the target website via the web browser.

A network request may be a request issued by the web browser to the target website. The network request may be issued by the browser extension of the web browser. The network request may specify one or more of the following: at least one action, at least one condition under which the at least one action is to be applied. The action may specify a type and/or a URL. The condition may specify a URL filter and/or one or more resource types. A resource type may specify an API through which to send the network request.

The network request may be issued through a browser extension or an API of the web browser. A declarative network request (DNR) may be issued through the API of the web browser rather than through a browser extension.

In the example of figure 1, S101, S111, S113 and S115 may be carried out by the browser extension of the web browser. Steps S103, S105, S107 and S109 may be carried out by the content script, i.e., the override script. Step S117 may be carried out by one or more application programming interfaces of the web browser.

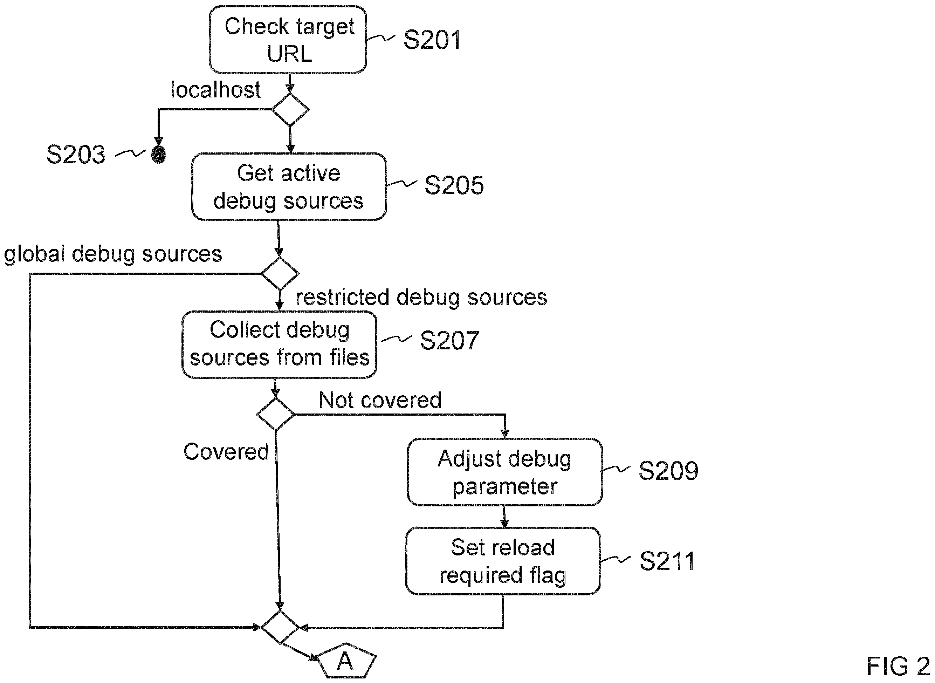

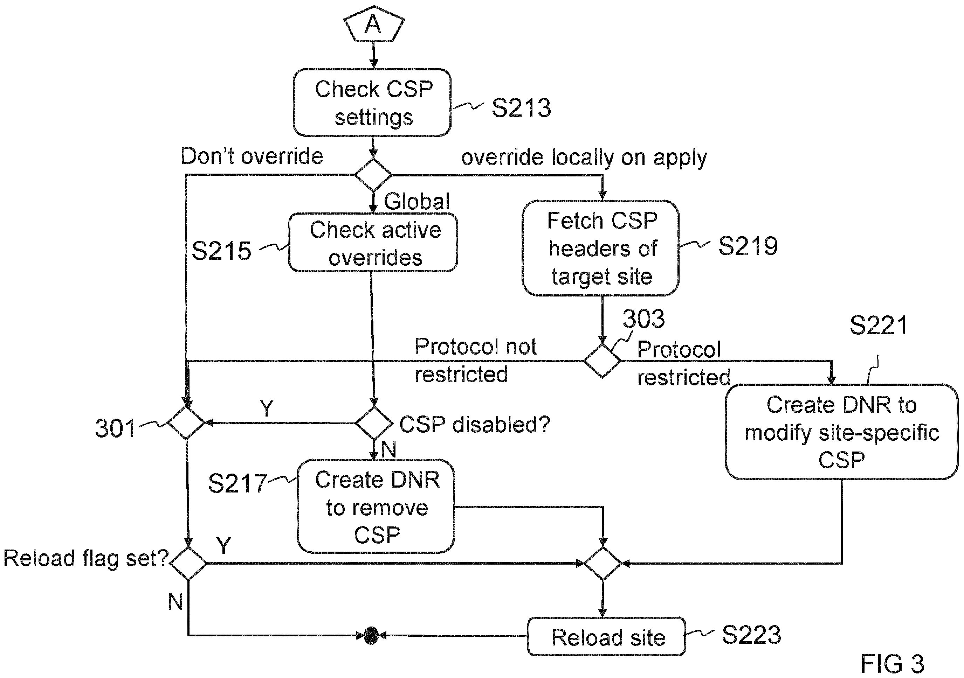

Figures 2 and 3 show further steps of the method for testing an update to a software application on a target website according to some embodiments.

At step S201, the respective URLs of the update to the software application may be checked. Specifically, URLs for each of the one or more modified files of the software application may be checked. In addition, URLs for each of the one or more unmodified files of the software application may be checked. In some cases, testing may be carried out at the version control system, i.e., at the localhost. In such cases, source files may be obtained from and tested at the version control system at S203. In other cases, modified files of the version control system that are included in the update to the software application may be obtained at S205.

At steps S207 to S211, the files included in the software update (i.e., the update to the software application) are determined and collected at the version control system. Steps S207 to S211 may include obtaining the modified files of the software update, and the respective URLs of the modified files prepared at steps S111 to S115. For example, at steps S207 to S211, it may be determined that one or more of the modified files prepared in steps S111 to S115 will be left out of the software update.

S213 may be carried out directly after S211. At step S213 one of three approaches for dealing with security headers of the target website may be determined. Other approaches are also possible. A first approach of the three approaches may be to ignore the security headers of the target website and not override the security policy of the target website. This approach may be carried out if there are no modified files of the software application to test for the update and it is desirable to access the target website and test the software application at the target website. In addition or alternatively, the first approach may be used if the browser allows remote execution of arbitrary strings or execution of remotely hosted code, e.g., if the web browser allows execution of code files from the version control system alongside code files from the target website. Such an approach could have negative implications for the security of the target website, particularly by enabling cross site scripting or accidental execution of malicious code. Following the first approach would cause the method to proceed to 301.

A second approach of the three approaches would be to globally disable the security policy of the target website. Following the second approach, the method would proceed from S213 to S215. At S215, it would be verified that the update to the software application on the target website includes one or more modified files of the software application that are modified by the update to the software application. The one or more modified files of the software application that are modified by the update to the software application may be referred to as active overrides.

In order to enable the one or more modified files of the software application to be retrieved from the version control system and executed alongside the unmodified files of the software application that are not modified by the update to the software application, step S217 may comprise creating one or more network requests to remove the security policy of the target website. The removal of the security policy may affect all hosts of the target website. The second approach may have negative security implications (i.e., ramifications or potential impact) for the target website particularly because cross site scripting and other forms of code injection attack may be possible while the security policy is removed.

A third approach of the three approaches would be to locally modify the security policy of the target website. At S219 the third approach may be followed. Accordingly, the method may further comprise retrieving, by the web browser, at least one security header of the target website. The at least one security header may include a security policy of the target website restricting remote code execution by web browsers accessing the target website. More specifically, the security policy of the target website may restrict remote code execution to specific hosts and/or specific protocols/schemes, e.g., via directives (e.g., fetch directives), as discussed below.

Interaction with the target website may be carried out using authentication credentials of the user of the target website.

In the example of figure 3, the security policy includes a content security policy (CSP). In addition or alternatively, the at least one security header may include one or more of the following: a subresource integrity policy (e.g., to ensure known and/or trusted resource files are loaded from third-party servers), a mixed content policy (e.g., to clarify a response of the web browser on pages loaded over HTTPS and linking content over plaintext HTTP), a hint to upgrade insecure requests (e.g., a hint on how a web browser should handle legacy or insecure links on web pages served using HTTPS), an API for credential management (e.g., an API implemented in JavaScript to access the user's credentials and facilitate login schemes), and a referrer policy (e.g., an extension to CSP to provide a hint to the web browser on how to generate a referrer header).

The at least one security policy may include a plurality of directives. The plurality of directives may include one or more fetch directives to control locations from which resource types may be loaded. In addition or alternatively, the plurality of directives may include one or more document directives that control properties of a document or work environment to which a policy applies, one or more navigation directives to control to which locations the user can navigate or submit a form, one or more reporting directives to control a reporting process of security policy violations. The directives (e.g., fetch directives) may specify one or more hosts from which resources can be loaded and/or one or more protocols or schemes that can be used to load resources.

At 303, based on the security header of the target website, it may be determ ined whether the security policy restricts a protocol or scheme that can be used to load resources at the target website. More specifically, it may be determined whether an additional application layer protocol including an encoded string for a URL is allowed by the security policy. If the protocol or scheme is not restricted, e.g., the additional application layer protocol is allowed, then it would not be necessary to modify the security policy and the method can proceed to 301. The additional application layer protocol may be the data uniform resource identifier scheme (e.g., as described in RFC 2397, August 1998, Larry Masinter). The data URI scheme may also be referred to as the data URL scheme.

The third approach may be carried out by loading a security script into a webpage of the target website. Executing the security script may comprise retrieving the at least one security header of the target website and modifying the security policy specified by the security header of the target website by adding the additional application protocol to the one or more allowed application layer protocols of the security policy. The security script may be injected into the webpage of the target website by an extension of the web browser.

If the protocol or scheme is restricted, then one or more declarative network requests (DNRs) may be created at S221 in order to modify the security policy of the target website.

For example, a retrieved CSP header might include the following CSP:

```
 {
 header: "default-src 'self' ; script-src 'self'
https://litmus.com 'unsafe-eval' ; style-src 'self'
 https://*.sap.hana.ondemand.com 'unsafe-inline' ; font-src 'self' data:
 https://*.sap.hana.ondemand.com ; img-src 'self' https:
http: data: blob: ; media-src 'self' https: http:
 data: blob: ; object-src blob: ; frame-src 'self'
https: gap: data: blob: mailto: tel: ; worker-src 'self' blob:
 https://litmus.com ; child-src 'self' blob:
https://das-workzone-integration.eu12.sapdas-dev.cloud.sap ;
 connect-src 'self' https: wss:; base-uri 'self' ; report-uri /sap/bc/csp/report",
  reportHeader: 'someOtherCSPHeader',
  host: 'etx-200-adm.wdf.sap.corp',
 } 
```

### Listing 3

A DNR to modify the CSP of listing 3 might including the following:

```
 {action: {
    type: 'modifyHeaders',
    response Headers: [
      {
        header: 'content-security-policy',
        operation: 'set',
        value: "default-src 'self' ; script-src
'self' https://litmus.com 'unsafe-eval' ; style-src 'self'
        https://*.sap.hana.ondemand.com 'unsafe-inline'
; font-src 'self' data: https://*.sap.hana.ondemand.com ;
        img-src 'self' https: http: data: blob: ; media-src
'self' https: http: data: blob: ; object-src blob: ; frame-
 src 'self' https: gap: data: blob: mailto: tel: ;
worker-src 'self' blob: https://litmus.com ; child-src 'self'
 blob: https://das-workzone-integration.eu12.sapdas-dev.
cloud.sap ; connect-src 'self' https: wss: data:;
 base-uri 'self' ; report-uri /sap/bc/csp/report",
      ], }, },
  condition: {
    urlFilter: 'etx-200-adm.wdf.sap.corp',
    resource Types: [
      'main_frame',
      'sub_frame',
      'xmlhttprequest', ],
  },
 }
```

### Listing 4

Accordingly, the DNR of listing 4 may modify the CSP of listing 3 to include the additional application layer protocol in the "connect-src" directive , more specifically, to the "data:" protocol in the "connect-src" directive.

After executing the declarative network requests created at step S221, the web browser may reload the target site at S223 in order to execute the update to the software application at the target site.

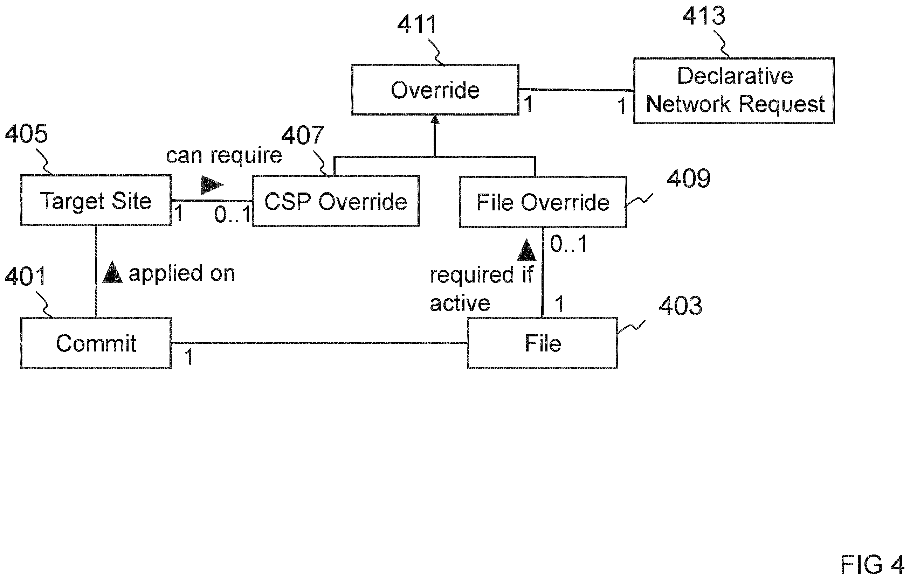

Figure 4 shows a class diagram specifying modules that may be used to implement the method for testing an update to a software application on a target website, as described above.

The modules may comprise a commit module 401 that may be used to access a webpage of the version control system for the software application via a web browser. The commit module 401 may be further configured to begin to determine, via the web browser at the webpage of the version control system, one or more modified files of the software application that are modified by the update to the software application on the target website.

The determining of the one or more modified files of the software application that are modified by the update to the software application on the target website may be carried out and/or completed by a file module 403. The update to the software application may further comprise one or more unmodified files of the software application that are not modified by the update to the software application.

A target site module 405 may be configured to apply results of implementing the commit module 401 on the target website, i.e., to test the update to the software application on the target website. The target site module 405 may require a security policy override module 407 in order to test the update to the software application on the target website. The security policy override module 407 may be configured to retrieve at least one security header of the target website, wherein the at least one security header includes a security policy of the target website restricting remote code execution by web browsers accessing the target website.

Upon determining the one or more modified files of the software application that are modified by the update to the software application, a file override module 409 may be configured to prepare each of the one or more modified files of the software application for testing on the target website. The preparing may comprise encoding each of the one or more modified files of the software application for access at the target website. The preparing may further comprise preparing, for each of the one or more modified files of the software application, redirection request to redirect a request for a URL referring to the respective modified file of the software application to a respective URL including the encoding of the respective modified file of the software application.

The modules may further comprise an override module 411. The override module 411 may be configured to load the update to the software application into a webpage of the target website via the web browser. The modules may further comprise a declarative network request module 413. The declarative network request module 413 may be configured to execute the update to the software application on the target website via the web browser.

Executing the update to the software application on the target website may comprise accessing the one or more modified files of the software application via their respective URLs, e.g., using the redirections as discussed above. Executing the update to the software application on the target website may further comprise accessing the one or more unmodified files of the software application via their respective URLs. The one or more unmodified files of the software application may be directly accessed on the target website, i.e., without redirection. Accessing the one or more modified files of the software application via their respective URLs may comprise using the prepared redirection requests to redirect requests for each of the one or more modified files to respective URLs encoding the respective one or more modified files of the software application.

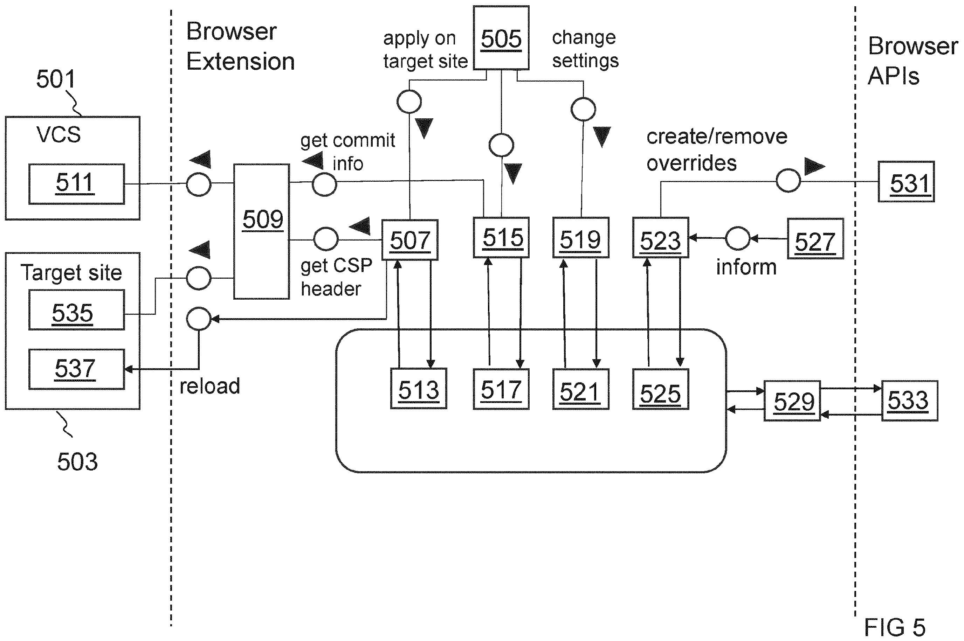

Figure 5 shows components of a computer system for testing an update to a software application on a target website. The system may comprise a version control system 501 and a target website 503 and a client computer 505. The client computer 505 may include a web browser having at least one web browser extension and one or more browser APIs.

The client computer 505 may access the version control system 501 by means of a URL service 507 and a content service 509. More specifically, the web browser of the client computer 505 may access a webpage of the version control system 501. by means of the URL service 507 and the content service 509. A browser extension of the web browser of the client computer 505 may inject an override script 511 into the webpage of the version control system 501. The override script may be a client-side script, more specifically, a content script. The override script may be executed within a private execution environment of the browser extension and may determine, at the webpage of the version control system, one or more modified files of the software application that are modified by the update to the software application on the target website. The update to the software application may further comprise one or more unmodified files of the software application that are not modified by the update to the software application.

The URL service 507 may store URL information for the modified files of the software application and the unmodified files of the software application in a URL information storage 513.

A commits service 515 may store information identifying file versions applicable to the update of the software application in a commits storage 517. More specifically, the commits service 515 may store information in the commits storage 517 identifying which files of the software application on the target website have been modified by the update to the software application and which files of the software application on the target website have not been modified by the update to the software application.

A settings manager 519 may store settings applicable for testing the update to the software application on the target website in a settings storage 521. Settings applicable for testing the update to the software application on the target website may include a setting that affects DNRs and a setting indicating whether to create local overrides.

An override service 523 may store information for use in overriding the one or more modified files of the software application that are modified by the update to the software application when executing the update to the software application on the target website via the web browser. The information stored by the override service 523 may be stored in an override storage 525.

An override handler 527 may provide additional information regarding modified files of the software application to the override service 523. For example, during testing of the update to the software application on the target website, further problems may be discovered that may be addressed by further modifications to files of the software application. Additional updates to the files of the software application (e.g., updates carried out by a user in response to testing) may be sent from the override handler 527 to the override service 523 to refine or fix the update to the software application.

The storage 513, 517, 521 and 525 may be managed by a storage service 529.

The services 507, 509, 515, 519, 523, 527 and 529 may be managed by the browser extension of the web browser of the client computer 505. In addition or alternatively, the storage 513, 517, 521, and 525 may be managed by the browser extension of the web browser of the client computer 505, or more specifically by the storage service 529 of the browser extension.

Overrides may be communicated to a declarative network request manager 531 for performing declarative network requests via APIs of the web browser. More specifically, respective URLs for accessing the one or more modified files of the software application may be provided to the declarative network request manager in order to execute the update to the software application on the target website via the web browser of the client computer 505. In addition, respective URLs for accessing the one or more unmodified files of the software application may be provided to the declarative network request manager in order to execute the update to the software application on the target website via the web browser of the client computer 505. The APIs of the web browser may be able to access a local storage 533 that is separate from the web browser extension.

A security script 535 may be injected into a webpage 537 of the target website 503 using authentication credentials of the user of the target website. The security script 535 may be a content script. The security script 535 may be configured to retrieve CSP headers of the content website. In addition, the security script may be configured to modify the CSP headers of the target website by adding an additional application layer protocol to the one or more allowed application layer protocols of a CSP of the CSP headers. The additional application layer protocol may specify an encoded string for a URL. Accordingly, the one or more modified files of the software application may be encoded and loaded as encoded strings into URLs of the update to the software application. The unmodified files of the software application may be directly accessed on the target website via their respective URLs.

Figure 6 shows an exemplary system for implementing the claimed subject matter including a general-purpose computing device in the form of a computing environment 620 (e.g., a personal computer). The computing environment 620 may be a conventional computing environment. The computing environment 620 includes a processing unit 622, a system memory 624, and a system bus 626. The system bus couples various system components including the system memory 624 to the processing unit 622. The processing unit 622 may perform arithmetic, logic and/or control operations by accessing the system memory 624. The system memory 624 may store information and/or instructions for use in combination with the processing unit 622. The system memory 624 may include volatile and non-volatile memory, such as a random-access memory (RAM) 628 and a read only memory (ROM) 630. A basic input/output system (BIOS) containing the basic routines that helps to transfer information between elements within the computing environment 620, such as during start-up, may be stored in the ROM 630. The system bus 626 may be any of several types of bus structures including a memory bus or memory controller, a peripheral bus, and a local bus using any of a variety of bus architectures.

The computing environment 620 may further include a hard disk drive 632 for reading from and writing to a hard disk (not shown), and an external disk drive 634 for reading from or writing to a removable disk 636. The removable disk may be a magnetic disk for a magnetic disk driver or an optical disk such as a CD-ROM for an optical disk drive. The hard disk drive 632 and the external disk drive 634 are connected to the system bus 626 by a hard disk drive interface 638 and an external disk drive interface 640, respectively. The drives and their associated computer-readable media provide non-volatile storage of computer readable instructions, data structures, program modules and other data for the computing environment 620. The data structures may include relevant data for the implementation of the method for testing an update to a software application on a target website, as described above. The relevant data may be organized in a database, for example a relational or object database.

Although the exemplary environment described herein employs a hard disk (not shown) and an external disk 636, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 636, ROM 630 or RAM 628, including an operating system (not shown), one or more application programs 644, other program modules (not shown), and program data 646. The application programs may include at least a part of the functionality as depicted in figures 1 to 5.

A user may enter commands and information, as discussed below, into the computing environment 620 through input devices such as keyboard 648 and mouse 650. Other input devices (not shown) may include a microphone (or other sensors), joystick, game pad, scanner, or the like. These and other input devices may be connected to the processing unit 622 through a universal serial bus (USB) interface 652 that is coupled to the system bus 626, or may be collected by other interfaces, such as a USB port interface 654, game port, a serial port or a parallel port. Further, information may be printed using printer 656. The printer 656, and other parallel input/output devices may be connected to the processing unit 622 through USB interface 654. A monitor 658 or other type of display device is also connected to the system bus 626 via an interface, such as a video input/output 660. In addition to the monitor, computing environment 620 may include other peripheral output devices (not shown), such as speakers or other audible output.

The computing environment 620 may communicate with other electronic devices such as a computer, telephone (wired or wireless), personal digital assistant, television, or the like. To communicate, the computing environment 620 may operate in a networked environment using connections to one or more electronic devices. Figure 6 depicts the computing environment 620 networked with remote computer 662. The remote computer 662 may be another computing environment such as a server, a router, a network PC, a peer device or other common network node, and may include many or all of the elements described above relative to the computing environment 620. The logical connections depicted in Figure 6 include a local area network (LAN) 664 and a wide area network (WAN) 666. Such networking environments are commonplace in offices, enterprise-wide computer networks, intranets and the Internet and may particularly be encrypted.

When used in a LAN networking environment, the computing environment 620 may be connected to the LAN 664 through a network I/O 668. In a networked environment, program modules depicted relative to the computing environment 620, or portions thereof, may be stored in a remote memory storage device resident on or accessible to remote computer 662. Furthermore other data relevant to method for testing an update to a software application on a target website (described above) may be resident on or accessible via the remote computer 662. It will be appreciated that the network connections shown are exemplary and other means of establishing a communications link between the electronic devices may be used.

The above-described computing system is only one example of the type of computing system that may be used to implement the method for testing an update to a software application on a target website.

## Claims

1. A computer-implemented method for testing an update to a software application on a target website, the method comprising:
accessing a web page of a version control system (501) for the software application via a web browser;
determining (S207 to S211), by the web browser at the web page of the version control system (501), one or more modified files of the software application that are modified by the update to the software application on the target website (503),
wherein the update to the software application refers to each of the one or more modified files of the software application by a respective URL, and
loading the update to the software application into a web page of the target website (503) via the web browser;
executing (S223) the update to the software application on the target website (503) via the web browser, comprising, accessing the one or more modified files of the software application via their respective URLs.

2. The method of claim 1, wherein accessing the web page of the version control system (501) for the software application via the web browser comprises using authentication credentials of a user of the version control system (501);
wherein determining the one or more modified files of the software application that are modified by the update to the software application may comprise using the authentication credentials of the user of the version control system (501).

3. The method of any one of the preceding claims, further comprising:
loading (S101) an override script (511) into the web page of the version control system (501);
executing, by the web browser, the override script (511), comprising determining, by the override script (511), the one or more modified files of the software application that are modified by the update to the software application on the target website (503) from the version control system (501),
wherein the override script (511) may be a client-side script.

4. The method of any one of the preceding claims,
wherein determining the one or more modified files of the software application that are modified by the update to the software application comprises:
comparing (S107) latest versions of files of the software application on the version control system (501) to versions of respective files of a specified version of the software application and/or
comparing update times of the files of the software application on the version control system (501) to update times of the files of the specified version of the software application,
wherein the files of the software application installed on the target website (503) have the specified version,
wherein the files of the software application having the specified version can be accessed on the version control system (501).

5. The method of any one of the preceding claims, further comprising:
for each one of the modified files of the software application that are modified by the update to the software application, storing the modified file of the software application with a different version of the modified file of the software application.

6. The method of any one of the preceding claims, before loading the update to the software application into the web page of the target website (503) via the web browser, the method further comprises:
retrieving (S219), by the web browser, at least one security header of the target website (503), wherein the at least one security header includes a security policy of the target website (503) restricting remote code execution by web browsers accessing the target website (503);
modifying (S221), by the web browser, the security policy specified by the security header of the target website (503) by adding an additional application layer protocol to the one or more allowed application layer protocols of the security policy, wherein the additional application layer protocol specifies an encoded string for a URL.

7. The method of claim 6, further comprising:
loading, by the web browser into the web page of the target website (503), a security script (535);
executing, by the web browser, the security script (535), comprising:
retrieving the at least one security header of the target website (503), and/or
modifying the security policy specified by the security header of the target website (503) by adding the additional application layer protocol to the one or more allowed application layer protocols of the security policy;
wherein the security script (535) may be a client-side script;
wherein loading the security script (535) and/or loading the update to the software application may comprise using authentication credentials of a user of the target website (503);
wherein the security script (535) may be injected into the web page of the target website (503) by an extension of the web browser.

8. The method of claim 6 or 7, wherein the at least one security header is an HTTP header or included in a META tag of an HTML document,
wherein the security header includes a content security policy header and /or the security policy includes a content security policy.

9. The method of any one of claims 6 to 8, wherein additional application layer protocol further specifies a media type and/or a character set,
wherein the media type identifies a client-side scripting language,
wherein the additional application layer protocol may be the data uniform resource identifier scheme.

10. The method of any one of the preceding claims, further comprising:
encoding (S111), by the web browser, each of the one or more modified files of the software application for access at the target website (503);
preparing (S113), by the web browser, for each of the one or more modified files of the software application, a redirection request to redirect a request for a URL referring to the respective modified file of the software application to a respective URL including the encoding of the respective modified file of the software application.

11. The method of claim 10,
wherein accessing the one or more modified files of the software application via their respective URLs comprises using the redirection requests for each of the one or more modified files to redirect requests for URLs of the one or more modified files of the software application to the respective URLs encoding the respective one or more modified files of the software application.

12. The method of claim 10 or 11,
wherein encoding each of the one or more modified files of the software application for access at the target website (503) comprises encoding each of the one or more modified files of the software application for access at the target website (503) via the additional application layer protocol;
when using the redirection requests, each respective URL encoding the modified file of the software application specifies the additional application layer protocol including the encoding of the respective modified file as the encoded string for the URL.

13. A computer program comprising instructions that, when the program is executed by a computer, cause the computer to carry out the method of any one of the preceding claims.

14. A computer-readable medium storing the computer program of claim 13.

15. A computer system for testing an update to a software application on a target website (503), the system comprising:
a web browser of a client computer (505) configured to:
access a web page of a version control system (501) for the software application;
determine, at the web page of the version control system (501), one or more modified files of the software application that are modified by the update to the software application on the target website (503),
wherein the update to the software application refers to each of the one or more modified files of the software application by a respective URL;
load the update to the software application into a web page of the target website (503); and
execute the update to the software application on the target website (503);
wherein, to execute the update to the software application on the target website (503) the web browser is further configured to access the one or more modified files of the software application via their respective URLs.
